# EUROPEAN PATENT APPLICATION

(11) **EP 4 751 923 A1**
(43) Date of publication of application: **03.06.2026**
(21) Application number: 24897014.7
(22) Date of filing: 27.08.2024
(51) Int. Cl.: B41M 5/00, B05C 5/00, B05C 9/12, B05C 11/10, B05D 1/26, B05D 1/36, B05D 5/00, B05D 7/24, B32B 27/00, B41J 2/01

(54) **PRINTED MATTER, PRINTING METHOD, PRINTER, AND PRINTING SYSTEM**

(30) Priority: 29.11.2023 JP 2023201264
(71) Applicant: MUTOH INDUSTRIES LTD., Tokyo 154-8560 (JP)
(72) Inventor: MORIYA, Tomoharu, Suwa-gun, Nagano 393-8585 (JP); YOSHIDA, Takayuki, Suwa-gun, Nagano 393-8585 (JP)
(74) Representative: Grünecker Patent- und Rechtsanwälte PartG mbB
(86) International application number: PCT/JP2024/030471
(87) International publication number: WO 2025/115323

(57) **Abstract**

A printed material (1) includes a substrate and an ink layer (3) disposed on a surface of the substrate. The ink layer (3) is formed by depositing a plurality of layers including a first layer (3(1)) in contact with the substrate and a surface layer (3(N)) located on a surface of the ink layer (3). All of the layers contain a coloring ink. At least the surface layer (3(N)) contains a tackiness-adjusting ink. The surface layer (3(N)) has an ink mixing ratio of 1.0 or more, which indicates the content of the tackiness-adjusting ink when the content of the coloring ink is 1. The ink mixing ratio of the first layer (3(1)) is smaller than the ink mixing ratio of the surface layer (3(N)).

## Description

### Field

The present invention relates to a printed material created by ejecting various types of ink onto a medium, and a printing method, a printing device, and a printing system for creating a printed material of this type.

### Background

Conventionally, an inkjet printing method is used to print images and text by ejecting ink from the nozzles of a print head. In this type of printing method, coloring ink is ejected according to the content of an image to be printed, and ink dots are formed on the surface of a substrate such as paper. For example, an image or the like is printed by forming ink dots with four color inks (C (cyan), M (magenta), Y (yellow), and K (black)) and white ink, and by controlling the arrangement and dot size of ink dots of each color to adjust colors and shading.

In addition, clear ink is conventionally used to give printed images a glossy, shiny, transparent, or luster texture, or to coat and protect the surface of printed images. Clear ink is a transparent or translucent ink called varnish ink, gloss ink, varnish, or the like.

Patent Literature 1 describes a method of forming a base layer for printing a reproduction image of an oil painting by ejecting clear ink and white ink from separate print heads. White and clear ink droplets are mixed on the substrate surface and cured by UV lamp irradiation. This method gives the base layer a gloss suitable for printing a reproduction image of an oil painting. After forming the base layer, color ink is ejected over the base layer to print a reproduction image.

### Citation List

### Patent Literature

Patent Literature 1: Japanese Patent Application Laid-Open Publication No. 2014-4786

### Summary

### Technical Problem

Clear ink has a different tactile feel when cured compared to coloring ink such as color ink and white ink. Printed materials whose surfaces are coated with clear ink have less stickiness (tackiness) than printed materials whose surfaces are formed by color or white ink. Depending on the intended use of printed materials, the tactile feel of a surface with lower tackiness may be preferable.

To reduce the stickiness (tackiness) of the surface of a printed material and improve the tactile feel, a coating layer only made of clear ink may be formed on the surface of the printed material by performing a separate process of applying clear ink after printing an image or the like, or by performing a process of ejecting clear ink from the print head. However, if the coating layer is formed by a separate process from the printing of an image or the like, there is a problem in that the number of processes increases and the time required to complete the printed material becomes longer.

In view of the above, the present invention is to improve a tackiness of a printed material surface while avoiding an increase in time required for a printing process.

### Solution to Problem

In order to solve the above problem, the present invention provides a printed material including a substrate and an ink layer disposed on a surface of the substrate. The ink layer is formed by depositing a plurality of layers including a first layer in contact with the substrate and a surface layer located on a surface of the ink layer. All of the layers include a coloring ink. At least the surface layer includes a tackiness-adjusting ink with lower tackiness when cured than the coloring ink. The surface layer has an ink mixing ratio of 1.0 or more, which indicates a content of the tackiness-adjusting ink when a content of the coloring ink is 1. The ink mixing ratio of the first layer is smaller than the ink mixing ratio of the surface layer.

In order to solve the above problem, the present invention provides a printing method in which ink is ejected toward a substrate to deposit an ink layer including a plurality of layers one by one. In a formation process of all of the layers, a coloring ink is ejected. At least in a formation process of a surface layer located on a surface of the layers, in addition to the coloring ink, a tackiness-adjusting ink with lower tackiness when cured than the coloring ink is ejected. In a formation process of the surface layer, ejection amounts of the coloring ink and the tackiness-adjusting ink are controlled so that an ink mixing ratio, which indicates an ejection amount of the tackiness-adjusting ink when an ejection amount of the coloring ink is 1, is 1.0 or more. In a formation process of a first layer that is a bottom layer of the layers, ejection amounts of the coloring ink and the tackiness-adjusting ink are controlled so that the ink mixing ratio of the first layer is smaller than the ink mixing ratio of the surface layer.

In order to solve the above problem, the present invention provides a printing system including a printing device and a control device. The printing device ejects ink toward a substrate to deposit an ink layer including a plurality of layers one by one. The printing device includes a transport mechanism configured to transport a substrate, one or more print heads each having a nozzle group configured to eject ink toward the substrate, and a control unit configured to control the transport mechanism and the one or more print heads based on print data supplied from the control device. The nozzle group includes a first nozzle group that ejects a coloring ink and a second nozzle group that ejects a tackiness-adjusting ink with lower tackiness when cured than the coloring ink. The first nozzle group and the second nozzle group are disposed in a same print head or different print heads. The control device supplies ink mixing ratio data to the control unit to control an ink mixing ratio for each of the layers, the ink mixing ratio indicating a content of the tackiness-adjusting ink when a content of the coloring ink is 1. The control unit controls the one or more print heads based on the ink mixing ratio data. The ink mixing ratio data is data for controlling ejection amounts of the coloring ink and the tackiness-adjusting ink so that the ink mixing ratio of a surface layer located on a surface of the layers is 1.0 or more and the ink mixing ratio of a first layer that is a bottom layer of the layers is smaller than the ink mixing ratio of the surface layer.

In order to solve the above problem, the present invention provides a printing device configured to eject ink toward a substrate to deposit an ink layer including a plurality of layers one by one. The printing device includes: a transport mechanism configured to transport a substrate; one or more print heads each having a nozzle group configured to eject ink toward the substrate; and a control unit configured to control the transport mechanism and the one or more print heads based on print data supplied from a higher-level device. The nozzle group includes a first nozzle group that ejects a coloring ink and a second nozzle group that ejects a tackiness-adjusting ink with lower tackiness when cured than the coloring ink. The first nozzle group and the second nozzle group are disposed in a same print head or different print heads. The control unit determines ink mixing ratio data for controlling an ink mixing ratio for each of the layers, based on the print data, and controls the one or more print heads based on the ink mixing ratio data, the ink mixing ratio indicating a content of the tackiness-adjusting ink when a content of the coloring ink is 1. The ink mixing ratio data is data for controlling ejection amounts of the coloring ink and the tackiness-adjusting ink so that the ink mixing ratio of a surface layer located on a surface of the layers is 1.0 or more and the ink mixing ratio of a first layer that is a bottom layer of the layers is smaller than the ink mixing ratio of the surface layer.

According to the present invention, the surface layer of the ink layer in the printed material contains a certain amount or more (ink mixing ratio of 1.0 or more) of the tackiness-adjusting ink, such as clear ink, which has lower tackiness than the coloring ink. This improves the tactile feel by reducing the stickiness (tackiness). On the other hand, the first layer has a smaller ink mixing ratio than the surface layer and thus contains more coloring ink to ensure adhesion to the substrate. Since the tackiness-adjusting ink can be simultaneously ejected during the process of ejecting the coloring ink, instead of forming only the coating layer in a separate process as in the conventional method, an increase in the number of processes can be avoided and an increase in the time required to create the printed material can be avoided.

In the printed material of the present invention, the ink mixing ratio of the surface layer is preferably 3.476 or less. In the printing method of the present invention, in the formation process of the surface layer, it is preferable to control the ejection amounts of the coloring ink and the tackiness-adjusting ink so that the ink mixing ratio is 3.476 or less. As a result of evaluation tests on printed materials for the stickiness (tackiness) of the surface layer, it was confirmed that the ink mixing ratio in this range reduces the stickiness (tackiness) and improves the tactile feel.

In the printed material of the present invention, it is preferable that all of the layers include the tackiness-adjusting ink, and the ink mixing ratio of the first layer is 1.5 or less. In the printing method of the present invention, it is preferable that in the formation process of all of the layers, the tackiness-adjusting ink is ejected, and in the formation process of the first layer, ejection amounts of the coloring ink and the tackiness-adjusting ink are controlled so that the ink mixing ratio is 1.5 or less. As a result of evaluation tests on printed materials for the adhesion to the substrate, it was confirmed that the ink mixing ratio in this range achieves good adhesion.

In the printed material of the present invention, the coloring ink and the tackiness-adjusting ink are UV-curable inks. In the printing method of the present invention, UV curable inks may be ejected as the coloring ink and the tackiness-adjusting ink, and in the formation process of all of the layers, UV light may be radiated toward the coloring ink and the tackiness-adjusting ink ejected.

In the printing method of the present invention, it is preferable that in the formation process of all of the layers, the coloring ink is ejected from a first nozzle group and the tackiness-adjusting ink is ejected from a second nozzle group different from the first nozzle group. In this way, a printed material with different ink mixing ratios for each layer of the ink layer can be created without pre-mixing the coloring ink and the tackiness-adjusting ink.

In the printing method of the present invention, it is preferable that an ink layer forming operation in which the coloring ink is ejected from the first nozzle group and the tackiness-adjusting ink is ejected from the second nozzle group is performed repeatedly, and the substrate is moved by a unit transport amount each time the ink layer forming operation is performed. Each of the first nozzle group and the second nozzle group has a nozzle row aligned in a transport direction of the substrate. The nozzle row includes a rear nozzle group disposed in a rear end region of the nozzle row in the transport direction, and a front nozzle group disposed in a front end region of the nozzle row in the transport direction. Assuming that: an ink mixing ratio for the surface layer is an ejection amount of the tackiness-adjusting ink ejected from the front nozzle group of the second nozzle group when an ejection amount of the coloring ink ejected from the front nozzle group of the first nozzle group is 1; and that an ink mixing ratio for the first layer is an ejection amount of the tackiness-adjusting ink ejected from the rear nozzle group of the second nozzle group when an ejection amount of the coloring ink ejected from the rear nozzle group of the first nozzle group is 1, ejection amounts from the rear nozzle group and the front nozzle group of each of the first nozzle group and the second nozzle group are controlled so that the ink mixing ratio for the first layer is smaller than the ink mixing ratio for the surface layer and the ink mixing ratio for the surface layer is 1.0 or more. In this way, the unit transport amount may be set so that multiple ink layer forming operations are performed while a print medium passes through the range facing the nozzle row, and the first layer may be formed by the rear end portion of the nozzle row (rear nozzle group) and the surface layer may be formed by the front end portion of the nozzle row (front nozzle group). Thus, by controlling the ejection amounts according to the nozzle position, it is possible to create a printed material in which the surface layer and the first layer each have a proper ink mixing ratio.

In the present invention, it is preferable that ejection amounts from the rear nozzle group and the front nozzle group of each of the first nozzle group and the second nozzle group are controlled so that the ink mixing ratio for the first layer is 1.5 or less and the ink mixing ratio for the surface layer is 3.476 or less. In this way, a printed material with reduced stickiness (tackiness) on the surface layer, improved tactile feel, and good adhesion of the first layer to the substrate can be created.

For example, letting L be a length of the nozzle row in the transport direction, and N be a number of layers of the ink layer, the rear nozzle group is disposed in a range from a rear end of the nozzle row in the transport direction to L/N, the front nozzle group is disposed in a range from a front end of the nozzle row in the transport direction to L/N, and the ink layer forming operation is performed at least N times with the unit transport amount set to the L/N. In this way, by repeating the ink forming operation in which the dimension obtained by dividing the length L of the nozzle row by the number of layers N of the ink layer is the unit transport amount, the first layer can be formed by the rear nozzle group and the surface layer can be formed by the front nozzle group.

In the printing system of the present invention, it is preferable that the control unit controls the transport mechanism and the one or more print heads to repeatedly perform an ink layer forming operation in which the coloring ink is ejected from the first nozzle group and the tackiness-adjusting ink is ejected from the second nozzle group, and allows the substrate to be moved by a unit transport amount each time the ink layer forming operation is performed. Each of the first nozzle group and the second nozzle group has a nozzle row aligned in a transport direction of the substrate. The nozzle row includes a rear nozzle group disposed in a rear end region of the nozzle row in the transport direction, and a front nozzle group disposed in a front end region of the nozzle row in the transport direction. When the first layer is formed, the coloring ink and the tackiness-adjusting ink are ejected from the rear nozzle group of each of the first nozzle group and the second nozzle group, based on the ink mixing ratio data. When the surface layer is formed, the coloring ink and the tackiness-adjusting ink are ejected from the front nozzle group of each of the first nozzle group and the second nozzle group, based on the ink mixing ratio data.

In the printing device of the present invention, it is preferable that the control unit controls the transport mechanism and the one or more print heads to repeatedly perform an ink layer forming operation in which the coloring ink is ejected from the first nozzle group and the tackiness-adjusting ink is ejected from the second nozzle group, and allows the substrate to be moved by a unit transport amount each time the ink layer forming operation is performed. Each of the first nozzle group and the second nozzle group has a nozzle row aligned in a transport direction of the substrate. The nozzle row includes a rear nozzle group disposed in a rear end region of the nozzle row in the transport direction, and a front nozzle group disposed in a front end region of the nozzle row in the transport direction. When the first layer is formed, the coloring ink and the tackiness-adjusting ink are ejected from the rear nozzle group of each of the first nozzle group and the second nozzle group, based on the ink mixing ratio data. When the surface layer is formed, the coloring ink and the tackiness-adjusting ink are ejected from the front nozzle group of each of the first nozzle group and the second nozzle group, based on the ink mixing ratio data.

In the printing system and the printing device of the present invention with such configurations, the unit transport amount may be set so that multiple ink layer forming operations are performed while a print medium passes through the range facing the nozzle row, and the first layer may be formed by the rear end portion of the nozzle row (rear nozzle group) and the surface layer may be formed by the front end portion of the nozzle row (front nozzle group). Thus, by controlling the ejection amounts according to the nozzle position, it is possible to create a printed material in which the surface layer and the first layer each have a proper ink mixing ratio.

### Advantageous Effects of Invention

According to the present invention, the surface layer of the ink layer in the printed material can have improved tactile feel by reducing stickiness (tackiness). On the other hand, the first layer has high adhesion to the substrate. Thus, the adhesion required for printing on a variety of substrates can be ensured. Since the tackiness-adjusting ink can be simultaneously ejected during the process of ejecting the coloring ink, instead of forming only the coating layer in a separate process as in the conventional method, an increase in the number of processes can be avoided and an increase in the time required to create the printed material can be avoided.

### Brief Description of Drawings

FIG. 1 is a cross-sectional view of a printed material according to the present invention.
FIG. 2 is an illustration of the configuration of a printing device.
FIG. 3 is a block diagram of a printing system.
FIG. 4 is a plan view of nozzle units in a print head and an illustration of nozzle rows in each nozzle unit.
FIG. 5 is an illustration of an ink layer formation process.
FIG. 6 is a table listing the results of tackiness and image quality evaluation tests.
FIG. 7 is a table listing the results of evaluation tests for adhesion to a substrate.
FIG. 8 is a block diagram of a printing device according to another embodiment.

### Description of Embodiments

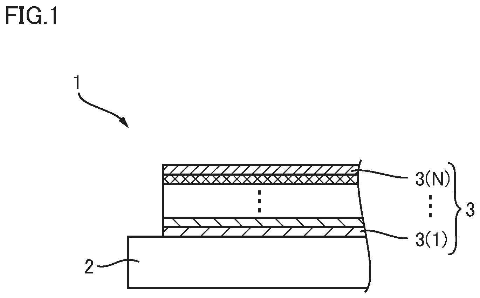

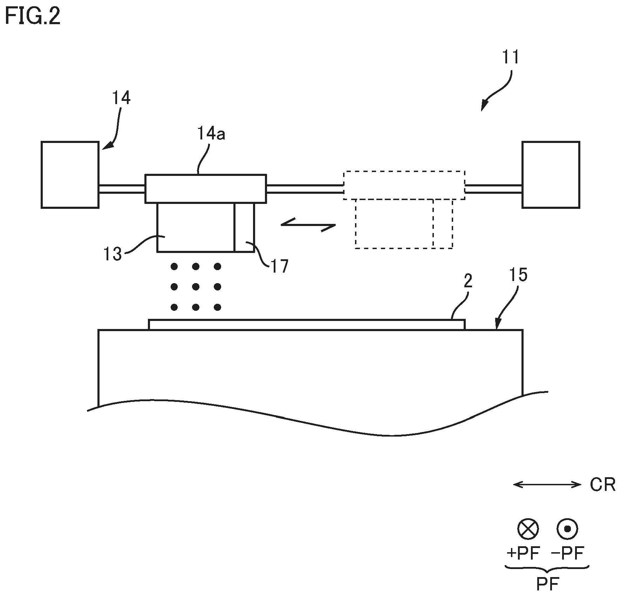

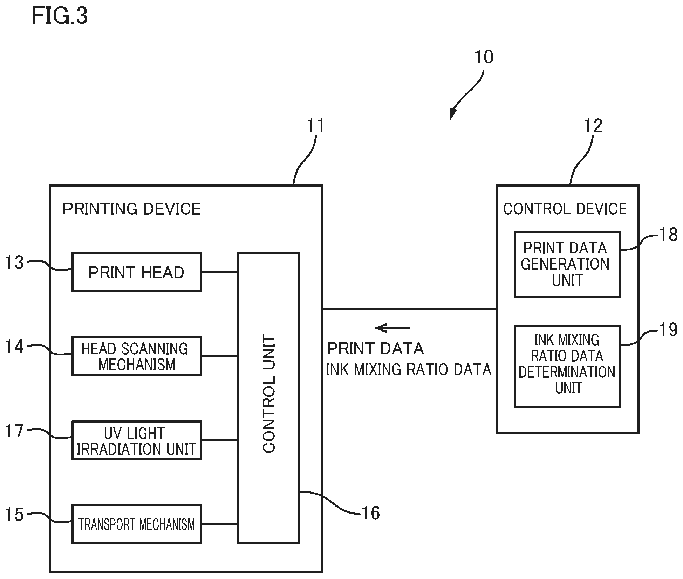

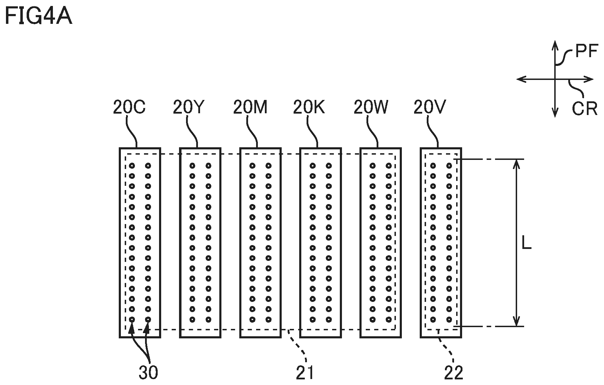

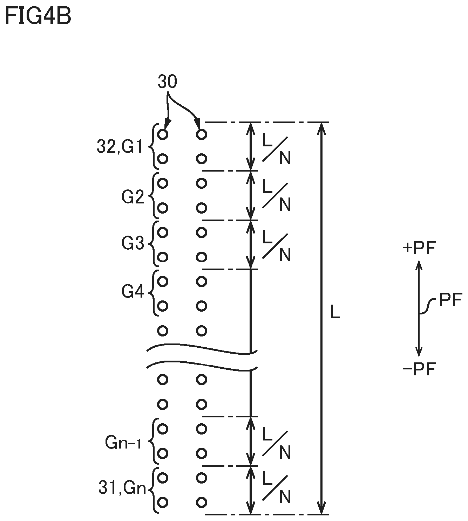

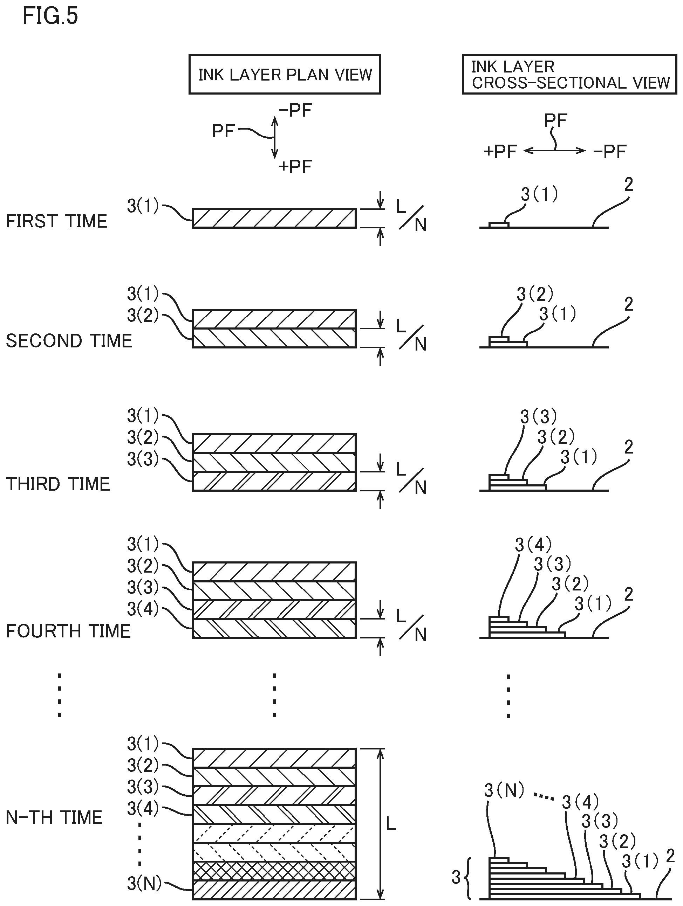

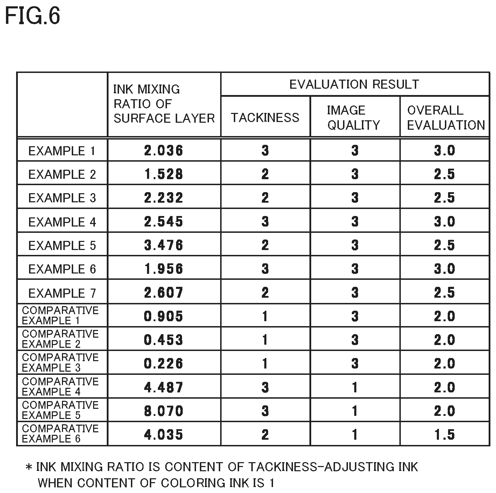

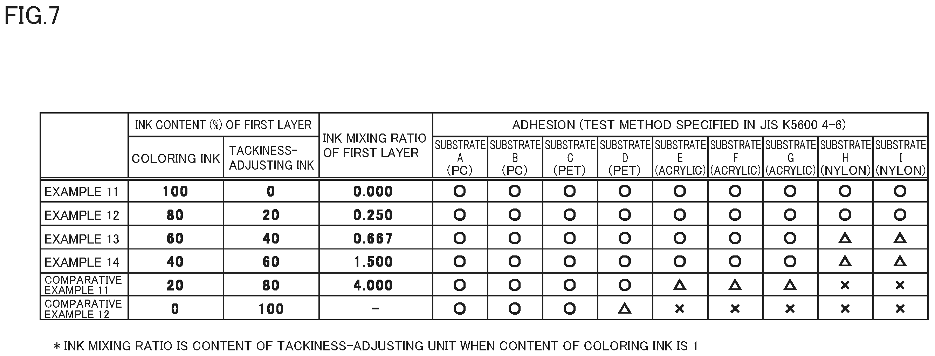

Embodiments of the present invention will be described below with reference to the drawings. FIG. 1 is a cross-sectional view of a printed material according to the present invention. FIG. 2 is an illustration of the configuration of a printing device. FIG. 3 is a block diagram of a printing system. FIG. 4 is a plan view of nozzle units in a print head and an illustration of nozzle rows in each nozzle unit. FIG. 5 is an illustration of an ink layer formation process. FIG. 6 is a table listing the results of tackiness and image quality evaluation tests. FIG. 7 is a table listing the results of evaluation tests for adhesion to a substrate.

### (Printed Material)

As illustrated in FIG. 1, a printed material 1 according to the present invention includes a print medium 2 and an ink layer 3 formed on a surface of the print medium 2. The print medium 2 is made of various substrates. The substrate is made of a resin, such as polycarbonate (PC), polyethylene terephthalate (PET), acrylic, nylon, or polyvinyl chloride (PVC). The substrate may be a resin other than the above or a material other than resins.

The printed material 1 includes the ink layer 3 including a plurality of layers. In the present embodiment, printing is performed by an inkjet method. Each layer of the ink layer 3 is made of a set of ink dots formed by ejected ink droplets. If ink droplets are ejected at a position overlapping ink dots before the ink dots have cured, the ink is mixed on the substrate. Each layer may be of equal thickness or may vary in thickness from layer to layer.

The ink layer 3 includes a plurality of inks with different tackiness (stickiness) when cured. In other words, the ink layer 3 includes a coloring ink and a tackiness-adjusting ink with lower tackiness (stickiness) than the coloring ink. For example, in the present embodiment, five inks including four color inks (C (cyan), M (magenta), Y (yellow), and K (black)) and W (white) ink are used as the coloring ink. The coloring ink is not limited to these five colors. For example, various types of color inks conventionally used for inkjet printing can be used. In the present embodiment, a colorless and transparent varnish ink is used as the tackiness-adjusting ink. The tackiness-adjusting ink is not limited to varnish ink. For example, another clear ink may be used or a non-clear ink may be used. The tackiness-adjusting ink is preferably colorless and transparent, and may be translucent.

As illustrated in FIG. 1, the ink layer 3 is created by depositing N layers from a first layer 3(1) to a surface layer 3(N) during printing. The first layer 3(1) is in contact with the substrate. The surface layer 3(N) is located on the surface of the ink layer 3. The number of layers N of the ink layer 3 can be, for example, eight. The number of layers N is not limited to eight, and can be any integer equal to or greater than two. For example, the number of layers N may be four.

All of a plurality of layers of the ink layer 3 contain coloring ink. The tackiness-adjusting ink is contained in at least the surface layer 3(N). The layers other than the surface layer 3(N) may or may not contain the tackiness-adjusting ink. Hereinafter, in the present description, the content of the tackiness-adjusting ink when the content of the coloring ink is 1 in each layer of the ink layer 3 is referred to as the "ink mixing ratio". The printed material 1 is configured so that the ink mixing ratio of each layer of the ink layer 3 is in a proper range described below.

### (Ink Mixing Ratio of Surface Layer)

Tackiness and image quality evaluation tests were conducted on printed materials with different ink mixing ratios for the surface layer 3(N). The results are listed in FIG. 6. The number of layers N of the ink layer was set to eight for all of the samples in Examples 1 to 7 and Comparative Examples 1 to 6. The samples in Examples 1 to 7 and Comparative Examples 1 to 6 were all printed using white ink as coloring ink and varnish ink as tackiness-adjusting ink.

Tackiness and image quality for each sample were evaluated by sensory testing. In the evaluation of tackiness, the surface of the ink layer 3 was rubbed with fingertips, and the degree of stickiness was determined on a three-point scale. Larger evaluation values indicate less stickiness and better tactile feel. Image quality was determined on a three-point scale. The larger the evaluation value, the less unevenness and the better appearance. The overall evaluation is the average of the tackiness evaluation value and the image quality evaluation value.

As illustrated in FIG. 6, in Examples 1 to 7, both tackiness and image quality are rated as 2 or higher, and the overall evaluation is 2.5 or higher. On the other hand, Comparative Examples 1 to 6 have an evaluation value of 1 (i.e., the lowest rating) for either tackiness or image quality.

In order to achieve a good tactile feel of the printed material 1 according to the present invention, the ink mixing ratio of the surface layer 3(N) was set to 1.0 or more. As illustrated in FIG. 6, Examples 1 to 7 all have ink mixing ratios of 1.0 or more. On the other hand, Comparative Examples 1 to 3 have ink mixing ratios less than 1.0. Comparative Example 1 has an ink mixing ratio of 0.9, and the tackiness is rated as the lowest (evaluation value of 1). Therefore, the ink mixing ratio of the surface layer 3(N) was set to 1.0 or more in order to achieve a tackiness evaluation value of 2 or higher.

The range of ink mixing ratios for the surface layer 3(N) is preferably set in consideration of image quality as well as tackiness. Comparative Examples 4 to 6 have ink mixing ratios greater than 4.0. In this case, the tackiness is rated as good (evaluation value of 2 or higher), but the image quality is rated as the lowest (evaluation value of 1). Therefore, it was confirmed that if the content of the tackiness-adjusting ink is too high, the surface unevenness increases and the evaluation of the image quality decreases. On the other hand, Example 5 has an ink mixing ratio of 3.476, and the image quality evaluation value is 2, which is good. Therefore, it is preferable that the ink mixing ratio of the surface layer 3(N) is set to 1.0 or more and 3.476 or less. This setting can improve tactile feel and suppress the degradation of image quality. More preferably, the ink mixing ratio of the surface layer 3(N) may be set to 1.5 or more and 2.5 or less.

Here, the evaluation results listed in FIG. 6 are for the samples with the number of layers N of the ink layer 3 set to eight. If the number of layers N is less than eight, for example, if the number of layers N is four, the ink mixing ratio of the surface layer 3(N) is preferably 1.583 or less, and more preferably 1.2 or less.

### (Ink Mixing Ratio of First Layer)

In order to avoid too low adhesion to the substrate of the printed material 1 according to the present invention, the ink mixing ratio of the first layer 3(1) was set to be smaller than the ink mixing ratio of the surface layer 3(N). The layers below the surface layer 3(N) do not affect the tactile feel, so there is no need to increase the ink mixing ratio. By reducing the ink mixing ratio lower than that of the surface layer 3(N), the decrease in adhesion can be suppressed and the amount of the tackiness-adjusting ink used can be reduced.

Adhesion evaluation tests were conducted on printed materials with different ink mixing ratios for the first layer 3(1). The results are listed in FIG. 7. The samples in Examples 11 to 14 and Comparative Examples 11 to 12 were all printed using white ink as coloring ink and varnish ink as tackiness-adjusting ink. Substrates A to I are polycarbonate (PC), polyethylene terephthalate (PET), acrylic, nylon, and polyvinyl chloride (PVC). Adhesion tests were conducted in accordance with the test method specified in JIS K5600 4-6.

As illustrated in FIG. 7, Examples 11 to 14 were rated as "△" or higher on a three-point scale (∘, △, ×) for adhesion to all of the substrates, while Comparative Examples 11 to 12 were rated as the lowest (×), depending on the substrates. Based on the above, the ink mixing ratio of the first layer 3(1) is preferably 1.5 or less. An ink mixing ratio of 0.25 or less for the first layer 3(1) is more preferable because if so, the adhesion to all of the substrates is rated as the highest (∘).

The printed material 1 may have any ink mixing ratio for layers other than the first layer 3(1) and the surface layer 3(N). For example, all layers other than the surface layer 3(N) can have the same ink mixing ratio as the first layer 3(1).

### (Printing System)

As illustrated in FIG. 3, a printing system 10 includes a printing device 11 and a control device 12. The control device 12 can communicate with the printing device 11. The printing device 11 ejects ink onto the print medium 2 to form the ink layer 3 based on print data and ink mixing ratio data supplied from the control device 12. The control device 12 is, for example, a general-purpose computer. The control device 12 has a printer driver installed to drive the printing device 11 and an application program to input print contents and print settings.

The print data is data such as an image or the like to be printed that is converted into data to be printed by the printing device 11. The ink mixing ratio data is data that specifies the composition of the inks that constitute each layer of the ink layer 3. For example, the ink mixing ratio data is data to cause printing to be performed so that the ink mixing ratio of each layer of the ink layer 3 is the value specified for that layer, for a combination of coloring ink and tackiness-adjusting ink used for printing.

The control device 12 includes a print data generation unit 18 that generates print data based on data such as an image, and an ink mixing ratio determination unit 19 that determines ink mixing ratio data. The ink mixing ratio determination unit 19 can have, for example, conversion data in which appropriate ink mixing ratio data is associated with various combinations of coloring ink and tackiness-adjusting ink. With such conversion data, the combination of coloring ink and tackiness-adjusting ink to be used can be determined based on the print contents, and furthermore, ink mixing ratio data can be determined using the conversion data.

The ink mixing ratio determination unit 19 determines ink mixing ratio data based on print settings as well as the data such as an image. For example, when the type of the print medium 2 and the print mode are set for printing, the content of ejected coloring ink may vary according to these settings. In such a case, the ink mixing ratio data is determined so that the target ink mixing ratio can be achieved by adjusting the content of ejected tackiness-adjusting ink according to the variation in the content of ejected coloring ink.

Various combinations of coloring ink and tackiness-adjusting ink are possible. For example, a combination of five coloring inks, namely, C (cyan), M (magenta), Y (yellow), K (black), and W (white), and varnish ink, for example, can be employed. Alternatively, a combination of W (white) ink and varnish ink, or a combination of K (black) ink and varnish ink can be employed. The ink mixing ratio determination unit 19 has conversion data corresponding to various combinations and various printing settings.

As illustrated in FIGS. 2 and 3, the printing device 11 includes a print head 13, a head scanning mechanism 14 that moves the print head 13 back and forth in a main scanning direction CR, a transport mechanism 15 that transports the print medium 2 in a transport direction PF orthogonal to the main scanning direction CR, and a control unit 16 that controls each unit of the printing device 11. The control unit 16 controls the head scanning mechanism 14, the transport mechanism 15, and the print head 13 to perform printing on the print medium 2 based on the print data and the ink mixing ratio data.

The head scanning mechanism 14 has, for example, as illustrated in FIG. 2, a carriage 14a on which the print head 13 is mounted, and moves the carriage 14a back and forth in the main scanning direction CR. The transport mechanism 15 has, for example, a transport surface facing the print head 13 in a direction orthogonal to the main scanning direction CR and orthogonal to the transport direction PF, and transports the print medium 2 while adsorbing the print medium 2 on the transport surface. The head scanning mechanism 14 and the transport mechanism 15 may be any configuration that ejects ink while moving the print head 13 relative to the print medium 2 in conjunction with the transport operation of the print medium 2.

The print head 13 is an inkjet head that ejects ink droplets toward the print medium 2. The printing device 11 performs an ink layer forming operation, under the control of the control unit 16, in which ink is ejected toward the print medium 2 while the print head 13 is moved in the main scanning direction CR each time the print medium 2 is transported by a unit transport amount in the transport direction PF. Hereafter, the layer formed by a single ink layer forming operation is referred to as a unit layer. The ink layer 3 is formed by depositing N unit layers.

The printing device 11 ejects ink through the ink layer forming operation the same number of times as the number of layers N of the ink layer 3 for the same region of the print medium 2. As a result, the unit layer is deposited N times. In a single ink layer forming operation, the print head 13 may move in the main scanning direction CR once or multiple times. For example, the print head 13 may be configured to move back and forth (i.e., move twice) in the main scanning direction CR in a single ink layer forming operation.

The printing device 11 performs printing using UV-curable ink (ultraviolet ray curable ink). For this purpose, the printing device 11 includes a UV light irradiation unit 17 that radiates UV light toward the print medium 2. For example, as illustrated in FIG. 2, the UV light irradiation unit 17 can be mounted on the carriage 14a alongside the print head 13. For each ink layer forming operation, the control unit 16 drives the UV light irradiation unit 17 to radiate UV light toward the print medium 2 to cure the ejected UV-curable ink. Although not illustrated in FIG. 2, the printing device 11 includes a cover that prevents external light from striking the nozzle outlet of the print head 13 and the portion of the print medium 2 onto which the UV-curable ink is ejected.

### (Nozzle Group)

FIG. 4(a) is a plan view of nozzle units in the print head 13. FIG. 4(b) is an illustration of nozzle rows 30 in each nozzle unit. As illustrated in FIG. 4(a), the print head 13 has nozzle units 20C, 20Y, 20M, 20K, 20W, and 20V aligned in the main scanning direction CR. The nozzle unit 20C has nozzles that eject C (cyan) coloring ink. The nozzle unit 20M has nozzles that eject M (magenta) coloring ink. The nozzle unit 20Y has nozzles that eject Y (yellow) coloring ink. The nozzle unit 20K has nozzles that eject K (black) coloring ink. The nozzle unit 20W has nozzles that eject W (white) coloring ink. The nozzle unit 20V has nozzles that eject varnish ink. Each nozzle unit has two nozzle rows 30 in which nozzles are aligned in the transport direction PF.

The arrangement of the nozzle units is not limited to the order illustrated in FIG. 4(a). The number of nozzle rows 30 in each nozzle unit is not limited to two. In the example illustrated in FIG. 4(a), a single nozzle unit has nozzles ejecting only the same ink, but nozzles ejecting different inks may be integrated into a single nozzle unit. A plurality of nozzle units ejecting the same ink may be provided. For example, a plurality of nozzle units 20V ejecting varnish ink may be provided. Furthermore, the number of nozzle units may be changed according to the number of ink colors to be ejected. For example, for monochrome printing, the print head may be configured only with the nozzle units 20K and 20V.

The print head 13 includes a first nozzle group 21 that ejects coloring ink and a second nozzle group 22 that ejects tackiness-adjusting ink. In the example illustrated in FIG. 4(a), all the nozzles in the nozzle units 20C, 20Y, 20M, 20K, and 20W constitute the first nozzle group 21. The nozzles in the nozzle unit 20V constitute the second nozzle group 22.

The example of the printing device 11 illustrated in FIG. 2 has a single print head 13, but may have multiple print heads 13. In the case of a single print head 13, the first nozzle group 21 and the second nozzle group 22 are all mounted on the same print head 13. In the case of multiple print heads 13, the first nozzle group 21 and the second nozzle group 22 can be mounted on different print heads 13. For example, the printing device 11 can be configured with a first print head with nozzle units 20C, 20Y, 20M, 20K, and 20W, and a second print head with a nozzle unit 20V.

In FIG. 2 and FIG. 4(b), the forward side of the transport direction PF is indicated by +PF and the backward side of the transport direction PF is indicated by -PF. As illustrated in FIG. 4(b), each nozzle row 30 includes a rear nozzle group 31 disposed in a rear end region of the nozzle row 30 in the transport direction PF, and a front nozzle group 32 disposed in a front end region of the nozzle row 30 in the transport direction PF.

For example, in the present embodiment, each nozzle row 30 is divided into N groups in the transport direction PF, and the nozzles are classified into N groups. Each group includes at least one nozzle aligned in a region with a length L/N. Hereafter, each group when the nozzle row 30 is divided into N groups is denoted by sign G1, G2, G3 ... Gn, in order from the forward side (+PF direction) to the backward side (-PF direction) of the transport direction PF. The rear nozzle group 31 includes the nozzles in the N-th group Gn disposed in the rear end region in the transport direction PF. The front nozzle group 32 includes the nozzles in the first group G1 disposed in the front end region in the transport direction PF.

### (Ink Layer Formation Process)

The printing device 11 performs the process of forming the ink layer 3 including the plurality of layers, as described below. The control unit 16 sets the unit transport amount of the print medium 2 by the transport mechanism 15 to L/N. Then, for each ink layer forming operation, the print medium 2 is transported by the unit transport amount of L/N.

FIG. 5 illustrates the ink layer formation process with the initial N ink forming operations immediately after the start of printing. In the first ink layer forming operation, the control unit 16 allows ink to be ejected from the nozzles of the N-th group Gn located at the rear end in the transport direction PF. This operation results in the first layer 3(1) in the region with a length of the unit transport amount L/N. In other words, in the first ink layer forming operation, the formation process of the first layer 3(1) is performed by the nozzles of the N-th group Gn (i.e., the rear nozzle group 31).

Then, in the second ink layer forming operation, ink is ejected from the nozzles of the (N-1)-th group Gn-1 in addition to the N-th group Gn. As a result, a second layer 3(2) is deposited on top of the first layer 3(1) initially formed, and a new first layer 3(1) is formed in the region with a length of the unit transport amount L/N at the back of the second layer 3(2) (in the -PF direction). In other words, in the second ink layer forming operation, the formation process of the first layer 3(1) by the nozzles of the N-th group Gn and the formation process of the second layer 3(2) by the nozzles of the (N-1)-th group Gn-1 are performed simultaneously.

Then, each time the ink layer forming operation is performed, the group of nozzles that eject ink is increased by one from the previous time, until the ink layer forming operation is performed N times. In this way, as illustrated in FIG. 5, each ink layer forming operation increases the unit layer by one for each region with a length of the unit transport amount L/N. In the N-th ink layer forming operation, the formation process of all layers from the first layer to the N-th layer is performed by ejecting ink from all nozzles of the first group G1 to the N-th group Gn. At this time, the surface layer 3(N) is formed by the nozzles of the first group G1 (i.e., the front nozzle group 32) in the front region.

From the (N+1)-th time, printing continues while ink is ejected from the nozzles of all groups. When printing is finished, the group that ejects ink may be reduced by one in order from the rear end side of the transport direction PF each time the ink layer forming operation is performed, in reverse order of when printing is started.

In printing by this method, each layer of the ink layer 3 is always formed by ink ejection from the nozzles of a certain group. In other words, the first layer 3(1) is formed by ink ejected from the nozzles of the N-th group Gn (i.e., the rear nozzle group 31). The surface layer 3(N) is formed by ink ejected from the nozzles of the first group G1 (i.e., the front nozzle group 32). The control unit 16 controls the amount of ink ejected from the nozzles of the first group G1 and the amount of ink ejected from the nozzles of the N-th group Gn so that the ink mixing ratios of the first layer 3(1) and the surface layer 3(N) are specified values.

For example, if the ink mixing ratio data supplied from the control device 12 is data specifying that the first layer 3(1) has the ink mixing ratio for the first layer and the surface layer 3(N) has the ink mixing ratio for the surface layer, the amount of ejection is controlled so that the ratio between the amount of ejection from the nozzles of the N-th group Gn (i.e., the rear nozzle group 31) in the first nozzle group 21 (nozzles of the nozzle units 20C, 20Y, 20M, 20K, 20W) and the ejection amount from the nozzles of the N-th group Gn (i.e., the rear nozzle group 31) in the second nozzle group 22 (nozzles of the nozzle unit 20V) is the ink mixing ratio for the first layer. As a result, the first layer 3(1) achieves the ink mixing ratio for the first layer.

Then, the amount of ejection is controlled so that the ratio between the amount of ejection from the nozzles of the first group G1 (i.e., the front nozzle group 32) in the first nozzle group 21 and the ejection amount from the nozzles of the first group G1 (i.e., the front nozzle group 32) in the second nozzle group 22 is the ink mixing ratio for the surface layer. As a result, the surface layer 3 (N) achieves the ink mixing ratio for the surface layer.

The ink mixing ratio data includes the ink mixing ratios for layers other than the first layer 3(1) and the surface layer 3(N). The control unit 16 controls the ejection amount from the nozzles of a group other than the first group G1 and the N-th group Gn to achieve the specified ink mixing ratio. The ink mixing ratio of the layer other than the first layer 3(1) and the surface layer 3(N) may be set in any way. For example, the ink mixing ratio of all of the layers other than the surface layer 3(N) can be a first ink mixing ratio (i.e., the same ink mixing ratio as the first layer 3(1)). In this way, the only layer that uses a large amount of tackiness-adjusting ink is the surface layer 3(N). Thus, the amount of the tackiness-adjusting ink can be reduced.

### (Operation Effects of Present Embodiment)

As described above, the printed material 1 of the present embodiment includes a substrate and the ink layer 3 disposed on a surface of the substrate. The ink layer 3 is formed by depositing a plurality of layers including the first layer 3(1) in contact with the substrate and the surface layer 3(N) located on a surface of the ink layer 3. All of the layers contain the coloring ink. At least the surface layer 3(N) contains a tackiness-adjusting ink. The surface layer 3(N) has an ink mixing ratio of 1.0 or more, which indicates the content of the tackiness-adjusting ink when the content of the coloring ink is 1. The ink mixing ratio of the first layer 3(1) is smaller than the ink mixing ratio of the surface layer 3(N).

In the printing method of the present embodiment, ink is ejected toward a substrate to deposit the ink layer 3 including the plurality of layers one by one. In a formation process of all of the layers, a coloring ink is ejected. At least in the formation process of the surface layer 3(N), the tackiness-adjusting ink is ejected in addition to the coloring ink. In the formation process of the surface layer 3(N), the ejection amounts of the coloring ink and the tackiness-adjusting ink are controlled so that the ink mixing ratio, which indicates the ejection amount of the tackiness-adjusting ink when the ejection amount of the coloring ink is 1, is 1.0 or more. In the formation process of the first layer 3(1), the ejection amounts of the coloring ink and the tackiness-adjusting ink are controlled so that the ink mixing ratio of the first layer 3(1) is smaller than the ink mixing ratio of the surface layer 3(N).

The printing system 10 of the present embodiment includes the printing device 11 and the control device 12. The printing device 11 ejects ink toward the substrate to deposit the ink layer 3 including the plurality of layers one by one. The printing device 11 includes the transport mechanism 15 that transports the substrate, one or more print heads 13 including the nozzle group that ejects ink toward the substrate, and the control unit 16 that controls the transport mechanism 15 and the print heads 13 based on the print data supplied from the control device 12. The nozzle group of the print head 13 includes the first nozzle group 21 that ejects the coloring ink and the second nozzle group 22 that ejects the tackiness-adjusting ink. The first nozzle group 21 and the second nozzle group 22 are disposed in the same or different print heads 13. The control device 12 supplies the ink mixing ratio data to the control unit 16 to control the ink mixing ratio for each of the layers. The ink mixing ratio indicates the content of the tackiness-adjusting ink when the content of the coloring ink is 1. The control unit 16 controls the print heads 13 based on the ink mixing ratio data. The ink mixing ratio data is data for controlling the ejection amounts of the coloring ink and the tackiness-adjusting ink so that all of the layers contain the coloring ink, the ink mixing ratio of the surface layer 3(N) located on the surface of the layers is 1.0 or more, and the ink mixing ratio of the first layer 3(1) that is the bottom layer of the layers is smaller than the ink mixing ratio of the surface layer 3(N).

According to the present embodiment, the surface layer 3(N) of the ink layer 3 contains a certain amount or more (ink mixing ratio of 1.0 or more) of the tackiness-adjusting ink, such as clear ink, which has lower tackiness than the coloring ink. This improves the tactile feel by reducing the stickiness (tackiness). On the other hand, the first layer 3(1) has a smaller ink mixing ratio than the surface layer 3(N) and thus contains more coloring ink to ensure adhesion to the substrate. Since the tackiness-adjusting ink can be simultaneously ejected during the process of ejecting the coloring ink, instead of forming only the coating layer in a separate process as in the conventional method, an increase in the number of processes can be avoided and an increase in the time required to create the printed material 1 can be avoided.

In the printed material 1 of the present embodiment, the ink mixing ratio of the surface layer 3(N) is preferably 3.476 or less. In the printing method of the present embodiment, in the formation process of the surface layer 3(N), it is preferable to control the ejection amounts of the coloring ink and the tackiness-adjusting ink so that the ink mixing ratio is 3.476 or less. As a result of evaluation tests on printed materials for the stickiness (tackiness) of the surface layer, it was confirmed that the ink mixing ratio in this range reduces the stickiness (tackiness) and improves the tactile feel.

In the printed material 1 of the present embodiment, the ink mixing ratio of the first layer 3(1) is preferably 1.5 or less. In the printing method of the present embodiment, in the formation process of the first layer 3(1), it is preferable to control the ejection amounts of the coloring ink and the tackiness-adjusting ink so that the ink mixing ratio is 1.5 or less. As a result of evaluation tests on printed materials for the adhesion to the substrate, it was confirmed that the ink mixing ratio in this range achieves good adhesion.

In the printing method of the present embodiment, in the formation process of all of the layers, the coloring ink is ejected from the first nozzle group 21 and the tackiness-adjusting ink is ejected from the second nozzle group 22 different from the first nozzle group 21. In this way, the printed material 1 with different ink mixing ratios for the layers of the ink layer 3 can be created without pre-mixing the coloring ink and the tackiness-adjusting ink.

In the printing method of the present embodiment, the ink layer forming operation in which the coloring ink is ejected from the first nozzle group 21 and the tackiness-adjusting ink is ejected from the second nozzle group 22 is performed repeatedly, and the substrate is moved by a unit transport amount each time the ink layer forming operation is performed. Each of the first nozzle group 21 and the second nozzle group 22 has the nozzle rows 30 aligned in the substrate transport direction PF. Each nozzle row 30 includes the rear nozzle group 31 disposed in the rear end region of the nozzle row 30 in the transport direction PF, and the front nozzle group 32 disposed in the front end region of the nozzle row 30 in the transport direction PF. Assuming that the ink mixing ratio for the surface layer is the ejection amount of the tackiness-adjusting ink ejected from the front nozzle group 32 of the second nozzle group 22 when the ejection amount of the coloring ink ejected from the front nozzle group 32 of the first nozzle group 21 is 1, and that the ink mixing ratio for the first layer is the ejection amount of the tackiness-adjusting ink ejected from the rear nozzle group 31 of the second nozzle group 22 when the ejection amount of the coloring ink ejected from the rear nozzle group 31 of the first nozzle group 21 is 1, the ejection amounts from the rear nozzle group 31 and the front nozzle group 32 in each of the first nozzle group 21 and the second nozzle group 22 are controlled so that the ink mixing ratio for the first layer is smaller than the ink mixing ratio for the surface layer, and the ink mixing ratio for the surface layer is 1.0 or more.

To perform printing by the printing method described above, in the printing system 10 of the present embodiment, the control unit 16 of the printing device 11 controls the transport mechanism 15 and the print head 13. The control unit 16 repeatedly performs the ink layer forming operation in which the coloring ink is ejected from the first nozzle group 21 and the tackiness-adjusting ink is ejected from the second nozzle group 22, and moves the substrate by a unit transport amount each time the ink layer forming operation is performed. Each of the first nozzle group 21 and the second nozzle group 22 has the nozzle rows 30 aligned in the transport direction PF. Each nozzle row 30 includes the rear nozzle group 31 disposed in the rear end region of the nozzle row 30 in the transport direction PF, and the front nozzle group 32 disposed in the front end region of the nozzle row 30 in the transport direction PF. When the first layer 3(1) is formed, the coloring ink and the tackiness-adjusting ink are ejected from the rear nozzle group 31 of each of the first nozzle group 21 and the second nozzle group 22, based on the ink mixing ratio for the first layer. When the surface layer 3(N) is formed, the coloring ink and the tackiness-adjusting ink are ejected from the front nozzle group 32 of each of the first nozzle group 21 and the second nozzle group 22, based on the ink mixing ratio for the surface layer.

In this way, in the present embodiment, the unit transport amount is set so that multiple ink layer forming operations are performed while the print medium 2 passes through the range facing the nozzle row 30, and the first layer 3(1) is formed by the rear end portion of the nozzle row 30 (rear nozzle group 31) and the surface layer 3(N) is formed by the front end portion of the nozzle row 30 (front nozzle group 32). Thus, by controlling the ejection ratio of coloring ink and the tackiness-adjusting ink according to the nozzle position, it is possible to create the printed material 1 in which the surface layer 3(N) and the first layer 3(1) each have a proper ink mixing ratio.

More specifically, in the present embodiment, letting L be the length of the nozzle row 30 in the transport direction PF, and N be the number of layers of the ink layer 3, it is assumed that the rear nozzle group 31 is disposed in the range from the rear end of the nozzle row 30 in the transport direction PF to L/N, and the front nozzle group 32 is disposed in the range from the front end of the nozzle row 30 in the transport direction PF to L/N. During printing, the ink layer forming operation is performed at least N times with a unit transport amount of L/N. As a result, the surface layer 3(N) can be formed by the rear nozzle group 31, and the first layer 3(1) can be formed by the front nozzle group 32.

### (Other Embodiments)

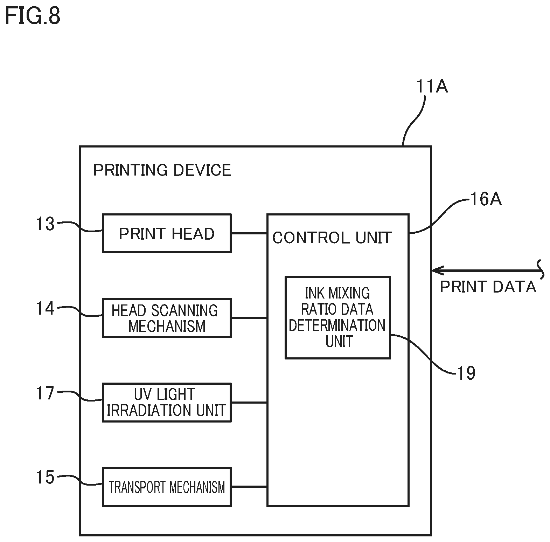

(1) FIG. 8 is a block diagram of a printing device 11A according to another embodiment. While in the above embodiment, the printed material 1 is created by the printing system 10 in which ink mixing ratio data is supplied from the control device 12 to the printing device 11, in the embodiment illustrated in FIG. 8, a control unit 16A of the printing device 11A includes an ink mixing ratio determination unit 19. When print data is supplied from a higher-level device, the ink mixing ratio determination unit 19 determines ink mixing ratio data based on the print data so that each layer of the ink layer 3 has a proper ink mixing ratio.

In other words, according to the embodiment illustrated in FIG. 8, the printing device 11A, which ejects ink toward a substrate to deposit an ink layer including a plurality of layers one by one, includes a transport mechanism 15 that transports the substrate, one or more print heads 13 each having a nozzle group that ejects ink toward the substrate, and a control unit 16 that controls the transport mechanism 15 and the print heads 13 based on the print data supplied from the higher-level device. The nozzle group of the print head 13 includes a first nozzle group 21 that ejects a coloring ink and a second nozzle group 22 that ejects a tackiness-adjusting ink with lower tackiness when cured than the coloring ink. The first nozzle group 21 and the second nozzle group 22 can be disposed in the same or different print heads 13. The control unit 16 determines ink mixing ratio data to control the ink mixing ratio for each of the layers, which indicates the content of the tackiness-adjusting ink when the content of coloring ink is 1, based on the print data, and controls the print heads 13 based on the ink mixing ratio data. The ink mixing ratio data is data for controlling the ejection amounts of the coloring ink and the tackiness-adjusting ink so that the ink mixing ratio of the surface layer 3(N) is 1.0 or more and the ink mixing ratio of the first layer 3(1) is smaller than the ink mixing ratio of the surface layer 3(N).

The printing device 11A illustrated in FIG. 8 is configured in the same way as the printing device 11 in the printing system 10 of the above embodiment, except that the ink mixing ratio determination unit 19 is provided in the control unit 16. Thus, the printing method according to the present invention can create the printed material 1 according to the present invention. Thus, the same effects as in the above embodiment can be achieved.
(2) Each of the above embodiments uses a serial printer that ejects ink while the print head 13 is moved by the head scanning mechanism 14, but the printing device 11 or 11A may be a line printer.
(3) Each of the above embodiments uses UV-curable inks as the coloring ink and the tackiness-adjusting ink, but the coloring ink and the tackiness-adjusting ink are not limited to UV-curable inks.

## Claims

1. A printed material comprising a substrate and an ink layer disposed on a surface of the substrate, wherein
the ink layer is formed by depositing a plurality of layers including a first layer in contact with the substrate and a surface layer located on a surface of the ink layer,
all of the layers include a coloring ink,
at least the surface layer includes a tackiness-adjusting ink with lower tackiness when cured than the coloring ink,
the surface layer has an ink mixing ratio of 1.0 or more, the ink mixing ratio indicating a content of the tackiness-adjusting ink when a content of the coloring ink is 1, and
the ink mixing ratio of the first layer is smaller than the ink mixing ratio of the surface layer.

2. The printed material according to claim 1, wherein the ink mixing ratio of the surface layer is 3.476 or less.

3. The printed material according to claim 1, wherein
all of the layers include the tackiness-adjusting ink, and
the ink mixing ratio of the first layer is 1.5 or less.

4. The printed material according to any one of claims 1 to 3, wherein the coloring ink and the tackiness-adjusting ink are UV-curable inks.

5. A printing method in which ink is ejected toward a substrate to deposit an ink layer including a plurality of layers one by one, wherein
in a formation process of all of the layers, a coloring ink is ejected,
at least in a formation process of a surface layer located on a surface of the layers, in addition to the coloring ink, a tackiness-adjusting ink with lower tackiness when cured than the coloring ink is ejected,
in a formation process of the surface layer, ejection amounts of the coloring ink and the tackiness-adjusting ink are controlled so that an ink mixing ratio is 1.0 or more, the ink mixing ratio indicating an ejection amount of the tackiness-adjusting ink when an ejection amount of the coloring ink is 1, and
in a formation process of a first layer that is a bottom layer of the layers, ejection amounts of the coloring ink and the tackiness-adjusting ink are controlled so that the ink mixing ratio of the first layer is smaller than the ink mixing ratio of the surface layer.

6. The printing method according to claim 5, wherein in the formation process of the surface layer, ejection amounts of the coloring ink and the tackiness-adjusting ink are controlled so that the ink mixing ratio is 3.476 or less.

7. The printing method according to claim 5, wherein
in the formation process of all of the layers, the tackiness-adjusting ink is ejected, and
in the formation process of the first layer, ejection amounts of the coloring ink and the tackiness-adjusting ink are controlled so that the ink mixing ratio is 1.5 or less.

8. The printing method according to claim 5, wherein
UV curable inks are ejected as the coloring ink and the tackiness-adjusting ink, and
in the formation process of all of the layers, UV light is radiated toward the coloring ink and the tackiness-adjusting ink ejected.

9. The printing method according to claim 5, wherein in the formation process of all of the layers, the coloring ink is ejected from a first nozzle group and the tackiness-adjusting ink is ejected from a second nozzle group different from the first nozzle group.

10. The printing method according to claim 9, wherein
an ink layer forming operation in which the coloring ink is ejected from the first nozzle group and the tackiness-adjusting ink is ejected from the second nozzle group is performed repeatedly,
the substrate is moved by a unit transport amount each time the ink layer forming operation is performed,
each of the first nozzle group and the second nozzle group has a nozzle row aligned in a transport direction of the substrate, the nozzle row including a rear nozzle group disposed in a rear end region of the nozzle row in the transport direction, and a front nozzle group disposed in a front end region of the nozzle row in the transport direction, and
assuming that: an ink mixing ratio for the surface layer is an ejection amount of the tackiness-adjusting ink ejected from the front nozzle group of the second nozzle group when an ejection amount of the coloring ink ejected from the front nozzle group of the first nozzle group is 1; and
that an ink mixing ratio for the first layer is an ejection amount of the tackiness-adjusting ink ejected from the rear nozzle group of the second nozzle group when an ejection amount of the coloring ink ejected from the rear nozzle group of the first nozzle group is 1,
ejection amounts from the rear nozzle group and the front nozzle group of each of the first nozzle group and the second nozzle group are controlled so that the ink mixing ratio for the first layer is smaller than the ink mixing ratio for the surface layer and the ink mixing ratio for the surface layer is 1.0 or more.

11. The printing method according to claim 10, wherein ejection amounts from the rear nozzle group and the front nozzle group of each of the first nozzle group and the second nozzle group are controlled so that the ink mixing ratio for the first layer is 1.5 or less and the ink mixing ratio for the surface layer is 3.476 or less.

12. The printing method according to claim 10, wherein
letting L be a length of the nozzle row in the transport direction, and N be a number of layers of the ink layer,
the rear nozzle group is disposed in a range from a rear end of the nozzle row in the transport direction to L/N,
the front nozzle group is disposed in a range from a front end of the nozzle row in the transport direction to L/N, and
the ink layer forming operation is performed at least N times with the unit transport amount set to the L/N.

13. A printing system comprising a printing device and a control device, the printing device ejecting ink toward a substrate to deposit an ink layer including a plurality of layers one by one, wherein
the printing device includes a transport mechanism configured to transport a substrate, one or more print heads each having a nozzle group configured to eject ink toward the substrate, and a control unit configured to control the transport mechanism and the one or more print heads based on print data supplied from the control device,
the nozzle group includes a first nozzle group that ejects a coloring ink and a second nozzle group that ejects a tackiness-adjusting ink with lower tackiness when cured than the coloring ink, the first nozzle group and the second nozzle group being disposed in a same print head or different print heads,
the control device supplies ink mixing ratio data to the control unit to control an ink mixing ratio for each of the layers, the ink mixing ratio indicating a content of the tackiness-adjusting ink when a content of the coloring ink is 1,
the control unit controls the one or more print heads based on the ink mixing ratio data,
the ink mixing ratio data is data for controlling ejection amounts of the coloring ink and the tackiness-adjusting ink so that the ink mixing ratio of a surface layer located on a surface of the layers is 1.0 or more, and the ink mixing ratio of a first layer that is a bottom layer of the layers is smaller than the ink mixing ratio of the surface layer.

14. The printing system according to claim 13, wherein
the control unit
controls the transport mechanism and the one or more print heads to repeatedly perform an ink layer forming operation in which the coloring ink is ejected from the first nozzle group and the tackiness-adjusting ink is ejected from the second nozzle group, and
allows the substrate to be moved by a unit transport amount each time the ink layer forming operation is performed,
each of the first nozzle group and the second nozzle group has a nozzle row aligned in a transport direction of the substrate, the nozzle row including a rear nozzle group disposed in a rear end region of the nozzle row in the transport direction, and a front nozzle group disposed in a front end region of the nozzle row in the transport direction,
when the first layer is formed, the coloring ink and the tackiness-adjusting ink are ejected from the rear nozzle group of each of the first nozzle group and the second nozzle group, based on the ink mixing ratio data, and
when the surface layer is formed, the coloring ink and the tackiness-adjusting ink are ejected from the front nozzle group of each of the first nozzle group and the second nozzle group, based on the ink mixing ratio data.

15. A printing device configured to eject ink toward a substrate to deposit an ink layer including a plurality of layers one by one,
the printing device comprising: a transport mechanism configured to transport a substrate; one or more print heads each having a nozzle group configured to eject ink toward the substrate; and a control unit configured to control the transport mechanism and the one or more print heads based on print data supplied from a higher-level device, wherein
the nozzle group includes a first nozzle group that ejects a coloring ink and a second nozzle group that ejects a tackiness-adjusting ink with lower tackiness when cured than the coloring ink, the first nozzle group and the second nozzle group being disposed in a same print head or different print heads,
the control unit determines ink mixing ratio data for controlling an ink mixing ratio for each of the layers, based on the print data, and controls the one or more print heads based on the ink mixing ratio data, the ink mixing ratio indicating a content of the tackiness-adjusting ink when a content of the coloring ink is 1, and
the ink mixing ratio data is data for controlling ejection amounts of the coloring ink and the tackiness-adjusting ink so that the ink mixing ratio of a surface layer located on a surface of the layers is 1.0 or more, and the ink mixing ratio of a first layer that is a bottom layer of the layers is smaller than the ink mixing ratio of the surface layer.

16. The printing device according to claim 15, wherein
the control unit
controls the transport mechanism and the one or more print heads to repeatedly perform an ink layer forming operation in which the coloring ink is ejected from the first nozzle group and the tackiness-adjusting ink is ejected from the second nozzle group, and
allows the substrate to be moved by a unit transport amount each time the ink layer forming operation is performed,
each of the first nozzle group and the second nozzle group has a nozzle row aligned in a transport direction of the substrate, the nozzle row including a rear nozzle group disposed in a rear end region of the nozzle row in the transport direction, and a front nozzle group disposed in a front end region of the nozzle row in the transport direction,
when the first layer is formed, the coloring ink and the tackiness-adjusting ink are ejected from the rear nozzle group of each of the first nozzle group and the second nozzle group, based on the ink mixing ratio data, and
when the surface layer is formed, the coloring ink and the tackiness-adjusting ink are ejected from the front nozzle group of each of the first nozzle group and the second nozzle group, based on the ink mixing ratio data.
